# EUROPEAN PATENT SPECIFICATION

(11) **EP 4 513 673 B1**
(45) Date of publication and mention of the grant of the patent: **29.04.2026**
(21) Application number: 23920754.1
(22) Date of filing: 26.10.2023
(51) Int. Cl.: H01Q 1/24, H01Q 5/48, H01Q 19/10, H01Q 21/26

(54) **ANTENNA AND BASE STATION SYSTEM**
ANTENNE UND BASISSTATIONSSYSTEM
ANTENNE ET SYSTÈME DE STATION DE BASE

(30) Priority: 07.02.2023 CN 202310075720
(43) Date of publication of application: 26.02.2025
(73) Proprietor: CICT Mobile Communication Technology Co., Ltd., Canglong Island, Jiangxia District Wuhan, Hubei 430205 (CN)
(72) Inventor: HUANG, Hui, Wuhan, Hubei 430205 (CN); ZHANG, Qiang, Wuhan, Hubei 430205 (CN); PAN, Lijun, Wuhan, Hubei 430205 (CN); LV, Chenfei, Wuhan, Hubei 430205 (CN)
(74) Representative: Studio Torta S.p.A.
(86) International application number: PCT/CN2023/126731
(87) International publication number: WO 2024/164562

(56) References cited:
- EP-A1- 4 024 610
- CN-A- 103 094 668
- CN-A- 107 910 636
- CN-A- 109 980 329
- CN-A- 111 180 860
- CN-A- 113 871 856
- CN-A- 115 663 459
- CN-A- 115 663 459
- CN-A- 115 663 460
- CN-A- 116 315 591
- US-A1- 2020 099 128

## Description

### CROSS-REFERENCES TO RELATED APPLICATIONS

The present application claims priority to Chinese patent application No. 202310075720.3 filed on February 07, 2023, entitled "Antenna and Base Station System".

### FIELD

The present application relates to the field of communication devices, and in particular, to an antenna and a base station system.

### BACKGROUND

With the development of base station antenna industries, antennas in the future are developed increasingly towards miniaturization and multi-band. A traditional low frequency radiation unit includes two pairs of +45° polarized dipoles. A first end of one coaxial line is connected to one of the dipoles, and a second end of the coaxial line is connected to a terminal; a first end of the other coaxial line is connected to another dipole, and a second end of the other coaxial line is connected to the terminal, and a hole on the terminal is connected to an external signal. A traditional feed mode of a radiation unit plus the terminal has poor intermodulation stability for an antenna, and the layout of the coaxial line is messy and cumbersome.

CN115663459A relates to the technical field of communication antennas, and provides a dual-frequency common-caliber radiation unit and an antenna, the dual-frequency common-caliber radiation unit comprises a feed base, a first frequency band radiator, a first frequency band feed group, a second frequency band radiator and a second frequency band feed group, the feed base comprises a metal base and a feed balun, the feed balun is embedded in the metal base; the first frequency band radiator and the second frequency band radiator are supported on the metal base, and the second frequency band radiator is nested in the first frequency band radiator; the first frequency band feed group comprises a plurality of first feed parts, one end of each first feed part is connected with the first frequency band radiator, and the other end of each first feed part is connected with the feed balun in a combined way so as to feed the first frequency band radiator; and the second frequency band feed group is used for carrying out coupled feed on the second frequency band radiator. According to the dual-frequency common-caliber radiation unit and the antenna, on the basis that miniaturization of the antenna is achieved, fusion between multiple frequency bands and multiple systems is achieved, and it is guaranteed that the index of each frequency band is not deteriorated.

### BRIEF SUMMARY

The present application provides an antenna and a base station system to solve problems of complex wiring and poor intermodulation stability due to feeding a low frequency radiation unit through a terminal in the related art, as defined in the annexed claims.

In a first aspect, the present application provides an antenna, including: a bowl-shaped low frequency radiation unit and a low frequency feed component, where
the bowl-shaped low frequency radiation unit includes a base and two pairs of first dipoles, the two pairs of first dipoles are ±45° polarized orthogonally disposed, the low frequency feed component includes two first feed baluns, each pair of the first dipoles are correspondingly connected to one first feed baluns, where each first feed baluns includes protective sleeves, an outer conductor, an inner conductor and a dielectric layer, the outer conductor is sleeved at an outer periphery of the inner conductor, the dielectric layer is disposed between the outer conductor and the inner conductor, the protective sleeves are sleeved at an outer periphery of the outer conductor, and the protective sleeves penetrate through the base.

According to the antenna provided by the present application, each pair of the first dipoles are correspondingly detachably connected to one first feed baluns, and the protective sleeves penetrate through the base detachably.

According to the antenna provided by the present application, the base is equipped with a slot, an outer periphery of each of the protective sleeves is equipped with a buckle, and the protective sleeves are connected to the base through the buckle and the slot.

According to the antenna provided by the present application, the antenna further includes a high frequency radiation unit, a high frequency feed component and a mount seat, where
the mount seat is disposed at the base, the high frequency radiation unit is electrically connected to the high frequency feed component, the high frequency radiation unit is embedded in the bowl-shaped low frequency radiation unit, and the high frequency feed component sequentially penetrates through the base and the mount seat.

According to the antenna provided by the present application, the mount seat is equipped with two first mount holes, and each of the protective sleeves penetrates through one corresponding first mount hole.

According to the antenna provided by the present application, the base is equipped with a position column, the mount seat is equipped with a position hole matched with the position column, and the position column is disposed in the position hole.

According to the antenna provided by the present application, the high frequency feed component includes two orthogonally disposed second feed baluns, the mount seat is equipped with two second mount holes, and each of the second feed baluns penetrates through the corresponding second mount hole.

According to the antenna provided by the present application, the low frequency feed component further includes four first coaxial cables, where the four first coaxial cables are connected to the four first dipoles in a one-to-one correspondence, and the two first coaxial cables corresponding to each pair of the first dipoles are connected to the two first feed baluns in a one-to-one correspondence.

According to the antenna provided by the present application, the low frequency feed component further includes two second coaxial cables, where the two second coaxial cables are connected to the two first feed baluns in a one-to-one correspondence.

In a second aspect, the present application provides a base station system, including any of the antennas described above.

In the antenna and base station system provided by the present application, the low frequency feed component provides signal input for two pairs of first dipoles, and a terminal-free feeding mode is adopted to reduce a layout space of the low frequency feed component in the antenna, increase the intermodulation stability of the antenna, and requirements for performance indexes are therefore satisfied.

### BRIEF DESCRIPTION OF THE DRAWINGS

In order to illustrate solutions in the present application more clearly, drawings required for the description of the embodiment is briefly introduced below. It should be noted that the drawings described below are some embodiments of the present application and other drawings may be obtained for those skilled in the art based on these drawings without creative work.
FIG. 1 is an exploded schematic diagram of an antenna according to the present application;
FIG. 2 is a first partial schematic structural diagram of an antenna according to the present application;
FIG. 3 is a second partial schematic structural diagram of an antenna according to the present application;
FIG. 4 is a schematic structural diagram of a low frequency feed component according to the present application;
FIG. 5 is a third partial schematic structural diagram of an antenna according to the present application;
FIG. 6 is a schematic structural diagram of a high frequency feed component according to the present application;
FIG. 7 is a schematic structural diagram of a mount seat according to the present application;
FIG. 8 is a schematic diagram of voltage standing wave ratios (VSWRs) at low frequencies according to the present application;
FIG. 9 is a schematic diagram of voltage standing wave ratios (VSWRs) at high frequencies according to the present application;
FIG. 10 is a diagram of radiation parameters of a radiation horizontal plane at low frequencies according to the present application; and
FIG. 11 is a diagram of radiation parameters of a radiation horizontal plane at high frequencies according to the present application.

Reference numerals:
1: bowl-shaped low frequency radiation unit; 11: base; 111: position column; 12: first dipole;
2: high frequency radiation unit; 21: second dipole;
3: low frequency feed component; 31: first feed baluns; 311: protective sleeve; 312: outer conductor; 313: inner conductor; 314: dielectric layer; 32: first coaxial cable;
4: high frequency feed component; 41: second feed baluns; 42: third coaxial cable;
5: mount seat; 51: first mount hole; 52: position hole; 53: second mount hole; 54: cable clip.

### DETAILED DESCRIPTION

To illustrate the objectives, solutions and advantages of the application, the solutions in the present application are described clearly and completely below in combination with the drawings in the application. The described embodiments are part of the embodiments of the application, not all of them. All other embodiments obtained by those skilled in the art based on the embodiments of the present application without creative effort belong to the scope of the present application.

In the description of the embodiments of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or component stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the present application, it should be noted that unless explicitly specified and defined otherwise, the terms "connected to" and "connected" shall be understood broadly, for example, it may be either fixedly connected or detachably connected, or can be integrated; it may be either mechanically connected, or electrically connected; it may be either directly connected, or indirectly connected through an intermediate medium. The specific meanings of the terms above in the present application can be understood by a person skilled in the art in accordance with specific conditions.

In the embodiments of this application, unless otherwise clearly stated and defined, the first feature being located "on" or "under" the second feature means that the first feature is in direct contact with the second feature or the first feature is in contact with the second feature by an intervening media. In addition, the first feature is "on", "above" and "over" the second feature can refer to that the first feature is directly above or obliquely above the second feature, or simply refer to that the level height of the first feature is higher than that of the second feature. The first feature is "under", "below" and "beneath" the second feature can refer to that the first feature is directly below or obliquely below the second feature, or simply refer to that the level height of the first feature is lower than that of the second feature.

In the description of this specification, description with reference to the terms "one embodiment", "some embodiments", "an example", "specific example", "some examples" and the like, refers to that specific features, structures, materials or characteristics described in combination with an embodiment or an example are included in at least one embodiment or example according to the embodiments of the present application. In this specification, schematic representations of the above terms are not necessarily directed to a same embodiment or example. Furthermore, the particular features, structures, materials or characteristics described can be combined in any suitable manner in any one or more embodiments or examples. In addition, those skilled in the art may combine the different embodiments or examples described in this specification, as well as the features of the different embodiments or examples, without conflicting each other.

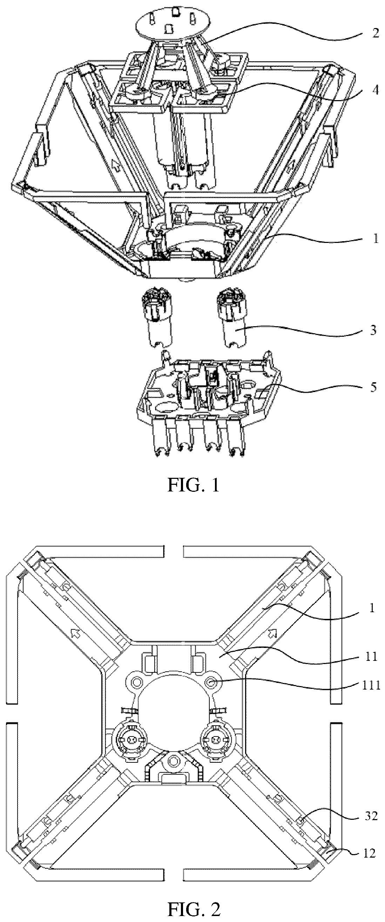

As shown in FIG. 1, FIG. 2, FIG. 3 and FIG. 4, the antenna of the embodiment of the present application includes: a bowl-shaped low frequency radiation unit 1 and a low frequency feed component 3.

The bowl-shaped low frequency radiation unit 1 includes a base 11 and two pairs of first dipoles 12, the two pairs of first dipoles 12 are ±45° polarized orthogonally disposed, the low frequency feed component 3 includes two first feed baluns 31, and each pair of the first dipoles 12 are correspondingly connected to one first feed baluns 31.

Compared with a traditional radiation unit that needs to be fed by adding a terminal, a terminal-free method is adopted in the bowl-shaped low frequency radiation unit 1 provided by the present application, which not only reduces a structural volume of the antenna, makes the layout of the coaxial line more concise, but also improves the intermodulation stability of the antenna.

Each first feed baluns 31 includes protective sleeves 311, an outer conductor 312, an inner conductor 313 and a dielectric layer 314, the outer conductor 312 is sleeved at an outer periphery of the inner conductor 313, the dielectric layer314 is disposed between the outer conductor 312 and the inner conductor 313, the protective sleeves 311 are sleeved at an outer periphery of the outer conductor 312, and the protective sleeves 311 penetrate through the base 11.

It should be noted that the protective sleeves 311, the outer conductor 312, the inner conductor 313 and the dielectric layer 314 are split structures, and the outer conductor 312, the dielectric layer 314 and the inner conductor 313 form a whole and are nested in the protective sleeves 311 together to form the first feed baluns 31. The protective sleeves 311 are insulation layers, which play a protective role and may also prevent the mount seat 5 from being scalded due to high temperature. The outer conductor 312 plays dual roles, which may not only conduct low level through a transmission loop, but also have a shielding effect. The dielectric layer 314 is mainly used to improve the anti-interference performance and the inner conductor 313 is used to transmit signals.

In theory of the antenna, the larger a voltage standing wave ratio (VSWR), the greater the reflection and the worse the matching performance. Ideally, when the VSWR is equal to 1, it means that a feeder is completely matched with an impedance of the antenna. As such, all the energy is radiated by the antenna, and there is no energy reflection loss. When the VSWR is infinite, it means full reflection and no energy is radiated at all. Therefore, the closer the VSWR is close to 1, the lower the reflectivity and the better the matching performance. Generally, when the VSWR is 1.5, the reflectivity is 4%, indicating that 96% of the energy may be radiated by the antenna.

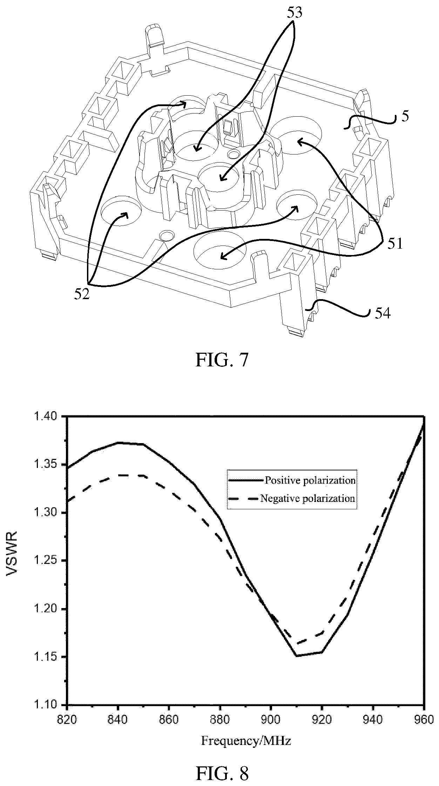

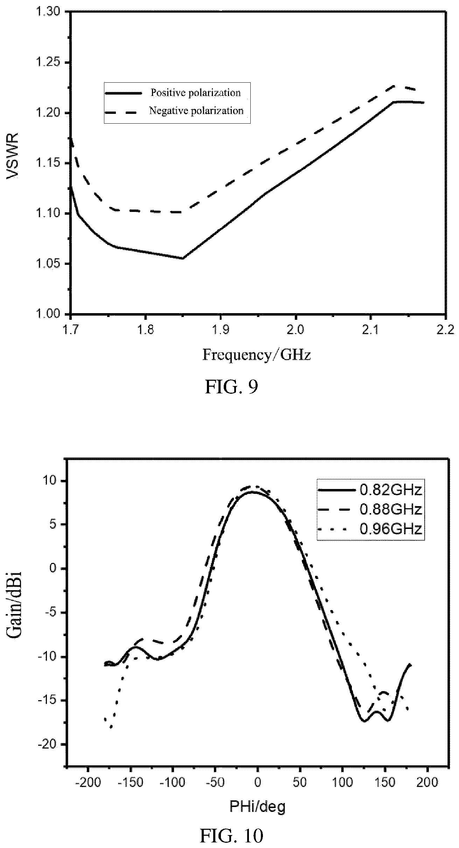

As shown in FIG. 8 and FIG. 9, both the values of the VSWR are less than 1.5, indicating that the antenna has good matching performance and extremely low reflectivity. Therefore, the antenna provided by the present application may satisfy requirements for performance indexes.

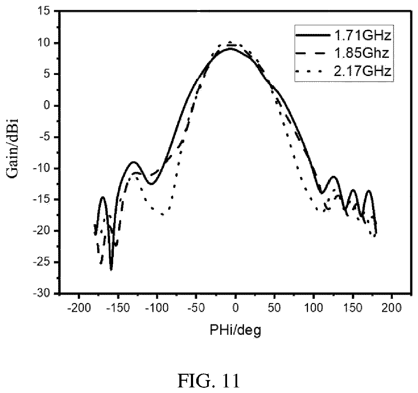

As shown in FIG. 10 and FIG. 11, a gain of the antenna is a very important factor in the performance indexes of the antenna. The higher the gain, the better the directivity of the antenna and the longer the propagation distance of a radio wave. The antenna provided by the present application has a higher gain and satisfies requirements for the performance index of the antenna.

In an embodiment of the present application, the low frequency feed component 3 is used to feed the two pairs of first dipoles 12, that is, the low frequency feed component 3 provides signal input for two pairs of first dipoles 12, and a terminal-free feeding mode is adopted to reduces a layout space of the radiation unit in the antenna, increases the intermodulation stability of the antenna, and thus meets requirements for performance indexes.

In an embodiment, as shown in FIG. 2, FIG. 3 and FIG. 4, each pair of the first dipoles 12 is correspondingly detachably connected to one first feed baluns 31, and the protective sleeves 311 penetrate through the base 11 detachably.

Due to the detachable connection mode of the first feed baluns 31, the first feed baluns 31 may also be used for low frequency radiation units at other bands.

Specifically, since the first feed balun 31 includes the protective sleeves 311, and the protective sleeves 311 are disposed at the periphery of the first feed balun 31, and the first feed balun 31 is disposed at the base 11, that is, the protective sleeves 311 are disposed in the base 11, and the detachable connection method makes the mounting of the first dipole 12 and the first feed baluns 31 simpler and more convenient. When one of the first dipoles 12 or the first feed balun 31 is faulty, only the faulty first dipoles 12 or the faulty first feed balun 31 needs to be replaced. At the same time, when the protective sleeves 311 are damaged, the protective sleeves 311 may also be replaced separately, thereby reducing the cost.

In an embodiment, in order to detachably penetrate the protective sleeve 311 through the base 11, the protective sleeves 311 and the base 11 may be connected by means of snap connection or threaded connection.

In an embodiment, the base 11 is equipped with a slot, an outer periphery of each of the protective sleeves 311 is equipped with a buckle, and the protective sleeves 311 are connected to the base 11 through the buckle and the slot.

In an embodiment, as shown in FIG. 1, FIG. 2 and FIG. 5, the antenna further includes a high frequency radiation unit 2, a high frequency feed component 4 and a mount seat 5. The mount seat 5 is disposed at the base 11, the high frequency radiation unit 2 is embedded in the bowl-shaped low frequency radiation unit 1, and the high frequency feed component sequentially penetrates through the base 11 and the mount seat 5.

In an embodiment, both the high frequency radiation unit 2 and the high frequency feed component 4 are disposed inside the bowl-shaped low frequency radiation unit 1. A through hole is disposed at a center of the base 11 of the bowl-shaped low frequency radiation unit 1, and the high frequency feed component 4 penetrates through the mount seat 5 through the through hole, and the base 11 is in contact with the mount seat 5.

That is, the bowl-shaped low frequency radiation unit 1, the high frequency radiation unit 2, the low frequency feed component 3 and the high frequency feed component 4 are all disposed at the mount seat 5, the mounting space is further compressed, and the volume of the antenna is reduced accordingly. A shape and a size of the base 11 should be matched with a shape and a size of the mount seat 5. In addition, the high frequency radiation unit 2 is equipped with two pairs of ±45° polarized second dipoles 21, and the two pairs of second dipoles 21 form two polarizations and are connected to the high frequency feed component 4.

It should be noted that the bowl-shaped low frequency radiation unit 1 and the high frequency radiation unit 2 are not located at the same plane with one being located at a higher plane and the other being located at a lower plane. The bowl-shaped low frequency radiation unit 1 is disposed in this way to ensure that the high frequency radiation unit 2 is as far away from the bowl-shaped low frequency radiation unit 1 as possible to reduce the mutual influence between the bowl-shaped low frequency radiation unit 1 and the high frequency radiation unit 2 and eliminate the signal interference between the bowl-shaped low frequency radiation unit 1 and the high frequency radiation unit 2.

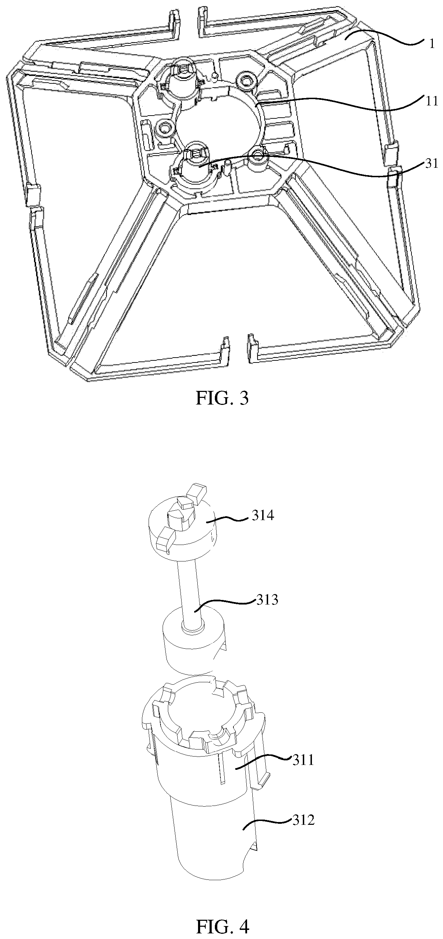

In an embodiment, as shown in FIG. 3, FIG. 4 and FIG. 7, the mount seat 5 is equipped with two first mount holes 51, and each of the protective sleeves 311 penetrates through the corresponding first mount hole 51.

In an embodiment, the two first feed baluns 31 penetrate through the corresponding first mount holes 51. For the stability of the structure and the reliability of the connection, a shape of the first mount hole 51 should be the same as a shape of the protective sleeve 311 of the first feed baluns 31, and a size of the first mount hole 51 should be slightly larger than a size of the protective sleeve 311.

In an embodiment, as shown in FIG. 1, FIG. 2 and FIG. 7, the base 11 is equipped with a position column 111, and the mount seat 5 is equipped with a position hole 52 matched with the position column 111, and the position column 111 is disposed in the position hole 52.

It should be noted that the base 11 is disposed at the mount seat 5 by penetrating the position column 111 through the position hole 52. That is, the bowl-shaped low frequency radiation unit 1 is disposed at the mount seat 5 through the position column 111, and the plurality of position columns 111 are disposed in a non-collinear form, which has a better mistake-proofing effect. This mounting mode makes the structure more compact, makes the various components more integrated, and is easy to mount and disassemble.

Exemplarily, as shown in FIG. 1, FIG. 2 and FIG. 7, there are a plurality of position columns 111, and the plurality of position columns 111 are arranged circumferentially. In an embodiment, in order to improve the structural stability and reliability of the base 11 and the mount seat 5, at least three position columns 111 should be disposed, and the plurality of position columns 111 are evenly arranged around the through hole of the base 11 with the through hole as the center.

In an embodiment, the position holes 52 of the mount seat 5 need to be in one-to-one correspondence with the position columns, a size of a position hole 52 should be slightly larger than a size of the position column 111, and the position column 111 may be smoothly installed in the position hole 52 without shaking.

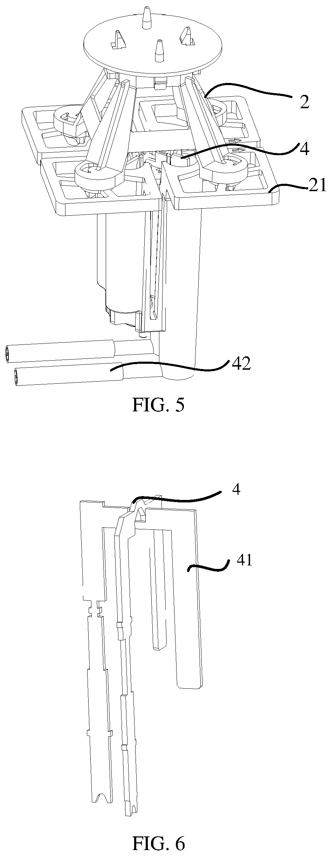

In an embodiment, as shown in FIG. 6 and FIG. 7, the high frequency feed component 4 includes two orthogonally disposed second feed baluns 41, the mount seat 5 is equipped with two second mount holes 53, and each of the second feed baluns 41 penetrates through the corresponding second mount hole 53.

The high frequency feed component 4 may be a sheet metal part, which has the advantages of light weight, high strength, good conductivity, and low cost. The high frequency feed component 4 may also be selected as a die-cast part or a printed circuit board and other materials with good conductivity.

In an embodiment, as shown in FIG. 1 and FIG. 2, the low frequency feed component 3 further includes four first coaxial cables 32, where the four first coaxial cables 32 are connected to four first dipoles 12 in a one-to-one correspondence, and two first coaxial cables 32 corresponding to each pair of first dipoles 12 are connected to a first feed balun 31.

It should be noted that a first end of the first coaxial cable 32 is connected to the first dipole 12, and a second end of the first coaxial cable 32 is connected to the first feed baluns 31. The first dipole 12 is connected to the first feed baluns 31 through the first coaxial cable 32, to achieve the purpose of providing signal input for the bowl-shaped low frequency radiation unit 1 through the low frequency feed component 3. This design makes the impedance matching of the bowl-shaped low frequency radiation unit 1 easily achieve and more accurate, thereby improving the radiation performance of the antenna.

An electromagnetic field of a general coaxial cable is confined between the inner conductor and the outer conductor, the coaxial cable has almost no radiation loss and is almost not interfered by external signals, and the signal transmission efficiency may be improved.

In an embodiment, the low frequency feed component 3 further includes two second coaxial cables (not shown in the figures), and the two second coaxial cables are connected to the two first feed baluns 31 in a one-to-one correspondence. The inner conductor 313 of the first feed baluns 31 is connected to the inner conductor of the second coaxial cable, and the outer conductor 312 of the first feed baluns 31 is connected to the outer conductor of the second coaxial cable.

In addition, as shown in FIG. 5 and FIG. 6, the low frequency feed component 4 further includes two third coaxial cables 42, and the two third coaxial cables 42 are connected to the two second feed baluns 41 in a one-to-one correspondence.

In an embodiment, a first end of the second feed baluns 41 is connected to a corresponding pair of second dipoles 21, and a second end of the second feed baluns 41 is connected to the third coaxial cable 42, and an external signal may be input to the second feed baluns 41 through the third coaxial cable 42.

In addition, as shown in FIG. 7, in order to fix the second coaxial cable and the third coaxial cable 42 at the mount seat 5, the mount seat 5 is equipped with cable clips 54. Exemplarily, a side of the mount seat 5 is equipped with four cable clips 54, and the four cable clips 54 are used to fix two second coaxial cables and two third coaxial cables 42 respectively. Alternatively, both sides of the mount seat 5 are equipped with four cable clips 54 and the two second coaxial cables and the two third coaxial cables 42 may be disposed at the corresponding line cards 54 based on actual mounting requirements.

In addition, an embodiment of the present application further provides a base station system, including the antenna as described above.

In an embodiment, since the base station system includes the antenna as described above, the specific structure of the antenna refers to the above embodiment, and the base station system shown in the present embodiment includes all the solutions of the above embodiment, it at least has all the beneficial effects achieved by all the above technical solutions, which would not be repeated here.

Finally, it should be noted that the above embodiments are only used to explain the solutions of the present application, and are not limited thereto; although the present application has been described in detail with reference to the foregoing embodiments, it should be understood by those skilled in the art that they may still modify the technical solutions documented in the foregoing embodiments and make equivalent substitutions to a part of the features; these modifications and substitutions do not make the essence of the corresponding solutions depart from the scope of the solutions of various embodiments of the present application.

## Claims

1. An antenna, comprising: a bowl-shaped low frequency radiation unit (1) and a low frequency feed component (3), wherein
the bowl-shaped low frequency radiation unit (1) comprises a base (11) and two pairs of first dipoles (12), the two pairs of first dipoles (12) are ±45°polarized orthogonally disposed, the low frequency feed component (3) comprises two first feed baluns (31), each pair of the first dipoles (12) are correspondingly connected to one first feed balun (31), wherein each first feed balun (31) comprises protective sleeves (311), an outer conductor (312), an inner conductor (313) and a dielectric layer (314), the outer conductor (312) is sleeved at an outer periphery of the inner conductor (313), the dielectric layer (314) is disposed between the outer conductor (312) and the inner conductor (313), the protective sleeves (311) are sleeved at an outer periphery of the outer conductor (312), and the protective sleeves (311) penetrate through the base (11).

2. The antenna of claim 1, wherein each pair of the first dipoles (12) are correspondingly detachably connected to one first feed balun (31), and the protective sleeves (311) penetrate through the base (11) detachably.

3. The antenna of claim 2, wherein the base (11) is equipped with a slot, an outer periphery of each of the protective sleeve (311) is equipped with a buckle, and the protective sleeves (311) are connected to the base (11) through the buckle and the slot.

4. The antenna of claim 1, wherein the antenna further comprises a high frequency radiation unit (2), a high frequency feed component (4) and a mount seat (5), wherein
the mount seat (5) is disposed at the base (11), the high frequency radiation unit (2) is electrically connected to the high frequency feed component (4), the high frequency radiation unit (2) is embedded in the bowl-shaped low frequency radiation unit (1), and the high frequency feed component (4) sequentially penetrates through the base (11) and the mount seat (5).

5. The antenna of claim 4, wherein the mount seat (5) is equipped with two first mount holes (51), and each of the protective sleeves (311) penetrates through one corresponding first mount hole (51).

6. The antenna of claim 4, wherein the base (11) is equipped with a position column (111), the mount seat (5) is equipped with a position hole (52) matched with the position column (111), and the position column (111) is disposed in the position hole (52).

7. The antenna of claim 4, wherein the high frequency feed component (4) comprises two orthogonally disposed second feed baluns (41), the mount seat (5) is equipped with two second mount holes (53), and each of the second feed baluns (41) penetrates through the corresponding second mount hole (53).

8. The antenna of claim 1, wherein the low frequency feed component (3) further comprises four first coaxial cables (32), the four first coaxial cables (32) are connected to the four first dipoles (12) in a one-to-one correspondence, and the two first coaxial cables (32) corresponding to each pair of the first dipoles (12) are connected to one first feed baluns (31).

9. The antenna of claim 1, wherein the low frequency feed component (3) further comprises two second coaxial cables, and the two second coaxial cables are connected to the two first feed baluns (31) in a one-to-one correspondence.

10. A base station system, comprising an antenna of any of claims 1 to 9.

## Patentansprüche

1. Antenne, umfassend: eine schalenförmige Niederfrequenz-Strahlungseinheit (1) und eine Niederfrequenz-Speisekomponente (3), wobei
die schalenförmige Niederfrequenz-Strahlungseinheit (1) eine Basis (11) und zwei Paare erster Dipole (12) umfasst, die zwei Paare erster Dipole (12) ±45° orthogonal polarisiert angeordnet sind, die Niederfrequenz-Speisekomponente (3) zwei erste Speise-Symmetrierübertrager (31) umfasst, jedes Paar der ersten Dipole (12) entsprechend mit einem ersten Speise-Symmetrierübertrager (31) verbunden ist, wobei jeder erste Speise-Symmetrierübertrager (31) Schutzhülsen (311), einen Außenleiter (312), einen Innenleiter (313) und eine dielektrische Schicht (314) umfasst, der Außenleiter (312) an einem Außenumfang des Innenleiters (313) aufgeschoben ist, die dielektrische Schicht (314) zwischen dem Außenleiter (312) und dem Innenleiter (313) angeordnet ist, die Schutzhülsen (311) an einem Außenumfang des Außenleiters (312) aufgeschoben sind und die Schutzhülsen (311) die Basis (11) durchdringen.

2. Antenne nach Anspruch 1, wobei jedes Paar der ersten Dipole (12) entsprechend lösbar mit einem ersten Speise-Symmetrierübertrager (31) verbunden ist und die Schutzhülsen (311) die Basis (11) lösbar durchdringen.

3. Antenne nach Anspruch 2, wobei die Basis (11) mit einem Schlitz ausgestattet ist, ein Außenumfang jeder der Schutzhülsen (311) mit einer Schnalle ausgestattet ist und die Schutzhülsen (311) durch die Schnalle und den Schlitz mit der Basis (11) verbunden sind.

4. Antenne nach Anspruch 1, wobei die Antenne ferner eine Hochfrequenz-Strahlungseinheit (2), eine Hochfrequenz-Speisekomponente (4) und einen Montagesitz (5) umfasst, wobei
der Montagesitz (5) an der Basis (11) angeordnet ist, die Hochfrequenz-Strahlungseinheit (2) elektrisch mit der Hochfrequenz-Speisekomponente (4) verbunden ist, die Hochfrequenz-Strahlungseinheit (2) in die schalenförmige Niederfrequenz-Strahlungseinheit (1) eingebettet ist und die Hochfrequenz-Speisekomponente (4) nacheinander die Basis (11) und den Montagesitz (5) durchdringt.

5. Antenne nach Anspruch 4, wobei der Montagesitz (5) mit zwei ersten Montagelöchern (51) ausgestattet ist und jede der Schutzhülsen (311) ein entsprechendes erstes Montageloch (51) durchdringt.

6. Antenne nach Anspruch 4, wobei die Basis (11) mit einer Positionssäule (111) ausgestattet ist, der Montagesitz (5) mit einem Positionsloch (52) ausgestattet ist, das an die Positionssäule (111) angepasst ist, und die Positionssäule (111) in dem Positionsloch (52) angeordnet ist.

7. Antenne nach Anspruch 4, wobei die Hochfrequenz-Speisekomponente (4) zwei orthogonal angeordnete zweite Speise-Symmetrierübertrager (41) umfasst, der Montagesitz (5) mit zwei zweiten Montagelöchern (53) ausgestattet ist und jeder der zweiten Speise-Symmetrierübertrager (41) das entsprechende zweite Montageloch (53) durchdringt.

8. Antenne nach Anspruch 1, wobei die Niederfrequenz-Speisekomponente (3) ferner vier erste Koaxialkabel (32) umfasst, die vier ersten Koaxialkabel (32) mit den vier ersten Dipolen (12) in einer Eins-zu-Eins-Entsprechung verbunden sind und die zwei ersten Koaxialkabel (32), die jedem Paar der ersten Dipole (12) entsprechen, mit einem ersten Speise-Symmetrierübertrager (31) verbunden sind.

9. Antenne nach Anspruch 1, wobei die Niederfrequenz-Speisekomponente (3) ferner zwei zweite Koaxialkabel umfasst und die²zwei zweiten Koaxialkabel mit den zwei ersten Speise-Symmetrierübertrager (31) in einer Eins-zu-Eins-Entsprechung verbunden sind.

10. Basisstationssystem, umfassend eine Antenne nach einem der Ansprüche 1 bis 9.

## Revendications

1. Antenne comprenant : une unité de rayonnement basse fréquence en forme de cloche (1) et un composant d'alimentation basse fréquence (3), dans laquelle
l'unité de rayonnement basse fréquence en forme de cloche (1) comprend une base (11) et deux paires de premiers dipôles (12), les deux paires de premiers dipôles (12) sont polarisés à ± 45° et disposés orthogonalement, le composant d'alimentation basse fréquence (3) comprend deux premiers symétriseurs d'alimentation (31), chaque paire de premiers dipôles (12) sont connectés de manière correspondante à un premier symétriseur d'alimentation (31), dans lequel chaque premier symétriseur d'alimentation (31) comprend des manchons de protection (311), un conducteur extérieur (312), un conducteur intérieur (313) et une couche diélectrique (314), le conducteur extérieur (312) est emmanché à une périphérie extérieure du conducteur intérieur (313), la couche diélectrique (314) est disposée entre le conducteur extérieur (312) et le conducteur intérieur (313), les manchons de protection (311) sont emmanchés à une périphérie extérieure du conducteur extérieur (312), et les manchons de protection (311) pénètrent à travers la base (11).

2. Antenne selon la revendication 1, chaque paire de premiers dipôles (12) étant connectés de manière détachable à un premier symétriseur d'alimentation (31), et les manchons de protection (311) pénétrant de manière détachable à travers la base (11).

3. Antenne selon la revendication 2, la base (11) étant équipée d'une fente, une périphérie extérieure de chaque manchon de protection (311) étant équipée d'une boucle, et les manchons de protection (311) étant raccordés à la base (11) à travers la boucle et la fente.

4. Antenne selon la revendication 1, l'antenne comprenant en outre une unité de rayonnement haute fréquence (2), un composant d'alimentation haute fréquence (4) et un siège de montage (5), dans laquelle
le siège de montage (5) est disposé au niveau de la base (11), l'unité de rayonnement haute fréquence (2) est connectée électriquement au composant d'alimentation haute fréquence (4), l'unité de rayonnement haute fréquence (2) est encastrée dans l'unité de rayonnement basse fréquence en forme de cloche (1), et le composant d'alimentation haute fréquence (4) pénètre séquentiellement à travers la base (11) et le siège de montage (5).

5. Antenne selon la revendication 4, le siège de montage (5) étant équipé de deux premiers trous de montage (51), et chacun des manchons de protection (311) pénétrant à travers un premier trou de montage (51) correspondant.

6. Antenne selon la revendication 4, la base (11) étant équipée d'une colonne de position (111), le siège de montage (5) étant équipé d'un trou de position (52) adapté à la colonne de position (111), et la colonne de position (111) étant disposée dans le trou de position (52).

7. Antenne selon la revendication 4, le composant d'alimentation haute fréquence (4) comprenant deux seconds symétriseurs d'alimentation (41) disposés orthogonalement, le siège de montage (5) étant équipé de deux seconds trous de montage (53), et chacun des seconds symétriseurs d'alimentation (41) pénétrant à travers le second trou de montage correspondant (53).

8. Antenne selon la revendication 1, le composant d'alimentation basse fréquence (3) comprenant en outre quatre premiers câbles coaxiaux (32), les quatre premiers câbles coaxiaux (32) étant connectés aux quatre premiers dipôles (12) dans une correspondance biunivoque, et les deux premiers câbles coaxiaux (32) correspondant à chaque paire des premiers dipôles (12) étant connectés à un premier symétriseur d'alimentation (31).

9. Antenne selon la revendication 1, le composant d'alimentation basse fréquence (3) comprenant en outre deux seconds câbles coaxiaux, et les deux seconds câbles coaxiaux étant connectés aux deux premiers symétriseurs d'alimentation (31) dans une correspondance biunivoque.

10. Système de station de base comprenant une antenne selon l'une quelconque des revendications 1 à 9.
